# EUROPEAN PATENT APPLICATION

(11) **EP 4 583 446 A1**
(43) Date of publication of application: **09.07.2025**
(21) Application number: 23864509.7
(22) Date of filing: 07.08.2023
(51) Int. Cl.: H04L 5/00

(54) **TRANSMISSION PARAMETER DETERMINATION METHOD AND APPARATUS**

(30) Priority: 16.09.2022 CN 202211130926
(71) Applicant: ZTE Corporation, Shenzhen, Guangdong 518057 (CN)
(72) Inventor: YE, Xinquan, Shenzhen, Guangdong 518057 (CN); ZHANG, Shujuan, Shenzhen, Guangdong 518057 (CN); CHEN, Yijian, Shenzhen, Guangdong 518057 (CN); YU, Hongkang, Shenzhen, Guangdong 518057 (CN); YU, Guanghui, Shenzhen, Guangdong 518057 (CN); YANG, Li, Shenzhen, Guangdong 518057 (CN)
(74) Representative: Ziebig Hengelhaupt Intellectual Property Attorneys Patentanwaltskanzlei PartGmbB
(86) International application number: PCT/CN2023/111515
(87) International publication number: WO 2024/055775

(57) **Abstract**

Provided in the present application are a transmission parameter determination method and apparatus. The method comprises: receiving control information; according to the received control information, determining an association relationship between M transmission control information states (TCI States) and N code division multiplexing (CDM) groups, M being greater than or equal to N, and M and N being both positive integers; and then, determining a transmission parameter according to the association relationship between the M TCI States and the N CDM groups.

## Description

The present disclosure claims a priority to Chinese Patent Application No. 202211130926.3, filed on September 16, 2022, which is hereby incorporated by reference in its entirety.

### TECHNICAL FIELD

The present disclosure relates to the technical field of communication, and in particular, to a transmission parameter determination method and apparatus.

### BACKGROUND

Distributed Multiple-Input Multiple-Output (Distributed Multiple-Input Multiple-Output, Distributed MIMO) and Cell-Free Massive Multiple-Input Multiple-Output (Cell-Free Massive Multiple-Input Multiple-Output, CF-MIMO) are emerging as pivotal technologies in the realm of B5G/6G multi-antenna, attracting growing research interest. A notable characteristic of the technologies is that spatial distribution of access points (Access Point, AP) in a given area are more dispersed than the spatial distribution of the centralized APs currently used in NR, and a number of APs is relatively large, where multiple APs serve multiple user equipment (User Equipment, UE) simultaneously. Therefore, how to determine appropriate transmission parameters in order to improve the efficiency and reliability of a communication system is a problem that needs to be solved urgently.

### SUMMARY

Embodiments of the present disclosure provide a transmission parameter determination method and apparatus, aiming to improve the efficiency and reliability of a communication system.

In an aspect, there is provided a transmission parameter determination method, including:
receiving control information;
determining, according to the control information, an association relationship between M transmission control information states (TCI states) and N code division multiplexing (CDM) groups, where M is greater than or equal to N, and M and N are both positive integers; and
determining, according to the association relationship between the M TCI states and the N CDM groups, a transmission parameter.

In another aspect, there is provided a transmission parameter determination method, including:
sending control information, where the control information is used to determine an association relationship between M transmission control information states (TCI states) and N code division multiplexing (CDM) groups, and the association relationship between the M TCI states and the N CDM groups is used to determine a transmission parameter, where M is greater than or equal to N, and M and N are both positive integers.

In yet another aspect, there is provided a transmission parameter determination apparatus, including:
a communication module, configured to receive control information;
a processing module, configured to determine, according to the control information, an association relationship between M transmission control information states (TCI states) and N code division multiplexing (CDM) groups; and determine a transmission parameter according to the association relationship between the M TCI states and the N CDM groups, where M is greater than or equal to N, and M and N are both positive integers.

In yet another aspect, there is provided a transmission parameter determination apparatus, including:
a processing module, configured to generate control information;
a communication module, configured to send the control information, where the control information is used to determine an association relationship between M transmission control information states (TCI states) and N code division multiplexing (CDM) groups, and the association relationship between the M TCI states and the N CDM groups is used to determine a transmission parameter, where M is greater than or equal to N, and M and N are both positive integers.

In yet another aspect, there is provided a transmission parameter determination apparatus, where the apparatus may implement functions performed in the various above-mentioned aspects or various possible designs, and the functions may be implemented through hardware. For example, in a possible design, the apparatus may include: a processor and a communication interface, and the processor may be configured to support the apparatus to implement the functions involved in any possible design of the above-mentioned first aspect or the second aspect. In yet another possible design, the apparatus may further include a memory, where the memory is configured to store computer-executable instructions and data necessary for the apparatus. When the apparatus is running, the processor executes the computer-executable instructions stored in the memory, so as to enable the apparatus to perform the transmission parameter determination method according to any possible design of the above-mentioned first aspect or the second aspect.

In yet another aspect, there is provided a computer-readable storage medium is provided, where the computer-readable storage medium may be a readable non-volatile storage medium, and the computer-readable storage medium stores computer instructions or a program, when the computer instructions or the program is run on a computer, so as to enable the computer to perform the transmission parameter determination method according to the above-mentioned first aspect or any possible design of the above-mentioned aspects.

In yet another aspect, there is provided a computer program product including instructions, and when the instructions are run on a computer, so as to enable the computer to perform the transmission parameter determination method according to the above-mentioned first aspect or any possible design of the above-mentioned aspects.

In the embodiments of the present disclosure, the association relationship between the M TCI states and N CDM groups can reflect a communication condition of a first node (e.g., a terminal device). Therefore, the determination for the transmission parameter are determined based on the association relationship between the M TCI states and the N CDM groups, which can adapt to the communication requirement of the first node, thereby improving the efficiency and reliability of the communication system.

### BRIEF DESCRIPTION OF THE DRAWINGS

FIG. 1 is a schematic diagram of an architecture of a communication system provided in the embodiments of the present disclosure.
FIG. 2 is a flowchart of a transmission parameter determination method provided in the embodiments of the present disclosure.
FIG. 3 is a structural schematic diagram of a transmission parameter determination apparatus provided in the embodiments of the present disclosure.
FIG. 4 is another structural schematic diagram of a transmission parameter determination apparatus provided in the embodiments of the present disclosure.
FIG. 5 is yet another structural schematic diagram of a transmission parameter determination apparatus provided in the embodiments of the present disclosure.

### DETAILED DESCRIPTION

The technical solutions in the embodiments of the present disclosure will be described below clearly and completely in conjunction with the accompanying drawings. Obviously, the described embodiments are merely a part of the embodiments of the present disclosure, but not all of the embodiments of the present disclosure. All other embodiments obtained according to the embodiments of the present disclosure by those of ordinary skill in the art without paying any creative effort shall be included in the protection scope of the present disclosure.

In the description of the present disclosure, unless otherwise specified, "/" means an "or" relationship, for example, "A/B" may represent A or B. "And/or" in the present disclosure is just an association relationship that describes relevant objects, indicating that three relationships may exist. For example, A and/or B may mean these three situations: A exists alone; A and B exist simultaneously; or B exists alone. In addition, "at least one" means one or more, and "plurality" means two or more. The words, such as "first" and "second" do not limit a quantity or an execution order, and the words such as "first" and "second" do not limit that object are different, either.

It should be noted that in the present disclosure, wordings, such as "exemplarily" or "for example" and variations thereof are used to indicate examples, illustrations, or clarifications. Any embodiment or design solution described in the present disclosure as "exemplarily" or "for example" should not be illustrated as being more preferred or advantageous over other embodiments or design solutions. Specifically, the usage of wordings such as "exemplarily" or "for example" is intended to present relevant concepts in a concrete way.

Herein, relevant technical terms involved in the present disclosure are explained first.

### 1. Code Division Multiplexing (Code Division Multiplexing, CDM) Group

CDM uses a code group containing mutually orthogonal code words to carry multiple signals, and adopts spread spectrum sequences with a same wavelength. The CDM has high spectrum resource utilization and may greatly increase system capacity upon being combined with WDM (Wavelength Division Multiplexing). The CDM includes code division multiple access (CDMA), frequency division multiple access (FDMA), time division multiple access (TDMA) and synchronous code division multiple access (SCDMA) and other relevant technologies.

A CDM group may include a plurality of antenna ports. For a same CDM group, the plurality of antenna ports in the CDM group multiplex the same time-frequency resource, and the plurality of antenna ports in the CDM group are distinguished in the form of code division, that is, code-domain resources of the sequences of the plurality of antenna ports in the same CDM are different.

### 2. Transport Block (Transport Block, TB)

A TB contains a data block of a Protocol Data Unit (Protocol Data Unit, PDU). TB may further serve as a basic unit of data exchange between a Media Access Control (Media Access Control, MAC) sublayer processed by a physical layer and the physical layer.

### 3. Redundancy Version (Redundancy Version, RV)

Design for RV is configured to implement incremental redundancy (Incremental Redundancy, IR) HARQ (Hybrid Automatic Repeat reQuest) transmission, that is, redundant bits generated by an encoder are divided into several groups. Each RV defines a transmission starting point. Different RVs are used for a first transmission and various HARQ retransmissions to achieve a gradual accumulation of redundant bits and complete the incremental redundancy HARQ operation.

The redundancy version is used to determine a starting position of an output sequence of transport blocks after channel coding. Currently, a number of RVs is usually 4, i.e., RV0, RV1, RV2, and RV3, respectively.

### 4. Transmission Configuration Indicator State (Transmission Configuration Indicator, TCI state)

A TCI state is used to indicate a quasi co location (Quasi Co Location, QCL) relationship between a channel large-scale parameter and one or two downlink reference signals during a process of data transmission. The TCI state includes a type of QCL and a reference signal of each type of QCL. The TCI state is configured by a network device to each terminal device. Therefore, based on a received TCI state, the terminal device may learn indication information of the relationship for the channel large-scale parameter of the received signal, and then demodulate data carried by the signal based on channel estimation.

### 5. Modulation and Coding Scheme (Modulation and Coding Scheme, MCS)

Currently, a modulation and coding scheme table (MCS table) includes an MCS index, a modulation order, a bit rate and spectrum efficiency. The MCS table provided by relevant technologies may refer to the following Table 1 to Table 4.

**Table 1**

| MCS Index | Modulation Order | Target Bit Rate | Spectral Efficiency |
|---|---|---|---|
| 0 | 2 | 120 | 0.2344 |
| 1 | 2 | 157 | 0.3066 |
| 2 | 2 | 193 | 0.3770 |
| 3 | 2 | 251 | 0.4902 |
| 4 | 2 | 308 | 0.6016 |
| 5 | 2 | 379 | 0.7402 |
| 6 | 2 | 449 | 0.8770 |
| 7 | 2 | 526 | 1.0273 |
| 8 | 2 | 602 | 1.1758 |
| 9 | 2 | 679 | 1.3262 |
| 10 | 4 | 340 | 1.3281 |
| 11 | 4 | 378 | 1.4766 |
| 12 | 4 | 434 | 1.6953 |
| 13 | 4 | 490 | 1.9141 |
| 14 | 4 | 553 | 2.1602 |
| 15 | 4 | 616 | 2.4063 |
| 16 | 4 | 658 | 2.5703 |
| 17 | 6 | 438 | 2.5664 |
| 18 | 6 | 466 | 2.7305 |
| 19 | 6 | 517 | 3.0293 |
| 20 | 6 | 567 | 3.3223 |
| 21 | 6 | 616 | 3.6094 |
| 22 | 6 | 666 | 3.9023 |
| 23 | 6 | 719 | 4.2129 |
| 24 | 6 | 772 | 4.5234 |
| 25 | 6 | 822 | 4.8164 |
| 26 | 6 | 873 | 5.1152 |
| 27 | 6 | 910 | 5.3320 |
| 28 | 6 | 948 | 5.5547 |
| 29 | 2 | reserved | |
| 30 | 4 | reserved | |
| 31 | 6 | reserved | |

**Table 2**

| MCS Index | Modulation Order | Target Bit Rate | Spectral Efficiency |
|---|---|---|---|
| 0 | 2 | 120 | 0.2344 |
| 1 | 2 | 193 | 0.3770 |
| 2 | 2 | 308 | 0.6016 |
| 3 | 2 | 449 | 0.8770 |
| 4 | 2 | 602 | 1.1758 |
| 5 | 4 | 378 | 1.4766 |
| 6 | 4 | 434 | 1.6953 |
| 7 | 4 | 490 | 1.9141 |
| 8 | 4 | 553 | 2.1602 |
| 9 | 4 | 616 | 2.4063 |
| 10 | 4 | 658 | 2.5703 |
| 11 | 6 | 466 | 2.7305 |
| 12 | 6 | 517 | 3.0293 |
| 13 | 6 | 567 | 3.3223 |
| 14 | 6 | 616 | 3.6094 |
| 15 | 6 | 666 | 3.9023 |
| 16 | 6 | 719 | 4.2129 |
| 17 | 6 | 772 | 4.5234 |
| 18 | 6 | 822 | 4.8164 |
| 19 | 6 | 873 | 5.1152 |
| 20 | 8 | 682.5 | 5.3320 |
| 21 | 8 | 711 | 5.5547 |
| 22 | 8 | 754 | 5.8906 |
| 23 | 8 | 797 | 6.2266 |
| 24 | 8 | 841 | 6.5703 |
| 25 | 8 | 885 | 6.9141 |
| 26 | 8 | 916.5 | 7.1602 |
| 27 | 8 | 948 | 7.4063 |
| 28 | 2 | reserved | |
| 29 | 4 | reserved | |
| 30 | 6 | reserved | |
| 31 | 8 | reserved | |

**Table 3**

| MCS Index | Modulation Order | Target Bit Rate | Spectral Efficiency |
|---|---|---|---|
| 0 | 2 | 30 | 0.0586 |
| 1 | 2 | 40 | 0.0781 |
| 2 | 2 | 50 | 0.0977 |
| 3 | 2 | 64 | 0.1250 |
| 4 | 2 | 78 | 0.1523 |
| 5 | 2 | 99 | 0.1934 |
| 6 | 2 | 120 | 0.2344 |
| 7 | 2 | 157 | 0.3066 |
| 8 | 2 | 193 | 0.3770 |
| 9 | 2 | 251 | 0.4902 |
| 10 | 2 | 308 | 0.6016 |
| 11 | 2 | 379 | 0.7402 |
| 12 | 2 | 449 | 0.8770 |
| 13 | 2 | 526 | 1.0273 |
| 14 | 2 | 602 | 1.1758 |
| 15 | 4 | 340 | 1.3281 |
| 16 | 4 | 378 | 1.4766 |
| 17 | 4 | 434 | 1.6953 |
| 18 | 4 | 490 | 1.9141 |
| 19 | 4 | 553 | 2.1602 |
| 20 | 4 | 616 | 2.4063 |
| 21 | 6 | 438 | 2.5664 |
| 22 | 6 | 466 | 2.7305 |
| 23 | 6 | 517 | 3.0293 |
| 24 | 6 | 567 | 3.3223 |
| 25 | 6 | 616 | 3.6094 |
| 26 | 6 | 666 | 3.9023 |
| 27 | 6 | 719 | 4.2129 |
| 28 | 6 | 772 | 4.5234 |
| 29 | 2 | reserved | |
| 30 | 4 | reserved | |
| 31 | 6 | reserved | |

**Table 4**

| MCS Index | Modulation Order | Target Bit Rate | Spectral Efficiency |
|---|---|---|---|
| 0 | 2 | 120 | 0.2344 |
| 1 | 2 | 193 | 0.3770 |
| 2 | 2 | 449 | 0.8770 |
| 3 | 4 | 378 | 1.4766 |
| 4 | 4 | 490 | 1.9141 |
| 5 | 4 | 616 | 2.4063 |
| 6 | 6 | 466 | 2.7305 |
| 7 | 6 | 517 | 3.0293 |
| 8 | 6 | 567 | 3.3223 |
| 9 | 6 | 616 | 3.6094 |
| 10 | 6 | 666 | 3.9023 |
| 11 | 6 | 719 | 4.2129 |
| 12 | 6 | 772 | 4.5234 |
| 13 | 6 | 822 | 4.8164 |
| 14 | 6 | 873 | 5.1152 |
| 15 | 8 | 682.5 | 5.3320 |
| 16 | 8 | 711 | 5.5547 |
| 17 | 8 | 754 | 5.8906 |
| 18 | 8 | 797 | 6.2266 |
| 19 | 8 | 841 | 6.5703 |
| 20 | 8 | 885 | 6.9141 |
| 21 | 8 | 916.5 | 7.1602 |
| 22 | 8 | 948 | 7.4063 |
| 23 | 10 | 805.5 | 7.8662 |
| 24 | 10 | 853 | 8.3301 |
| 25 | 10 | 900.5 | 8.7939 |
| 26 | 10 | 948 | 9.2578 |
| 27 | 2 | reserved | |
| 28 | 4 | reserved | |
| 29 | 6 | reserved | |
| 30 | 8 | reserved | |
| 31 | 10 | reserved | |

Currently, downlink control information (Downlink Control Information, DCI) has many different uses, such as scheduling a physical downlink shared channel (Physical Downlink Shared Channel, PDSCH), scheduling a physical uplink shared channel (Physical Uplink Share Channel, PUSCH), capable of scheduling a physical downlink shared channel (Physical Downlink Shared Channel, PDSCH), indicating transmit power control (Transmit Power Control, TPC) information of a physical downlink shared channel (Physical Uplink Control Channel, PUCCH) and PUSCH.

DCI for different uses are in different formats, where DCI for scheduling PDSCH includes at least a DCI format identifier, resource relevant information, transport block relevant information, hybrid automatic repeat request relevant information, multi-antenna relevant information, and PUCCH relevant information. The DCI format identifier is used to indicate an uplink transmission or a downlink transmission. The resource relevant information includes a carrier identifier, a bandwidth part identifier, frequency-domain resource allocation (Frequency-domain Resource Allocation, FDRA), time-domain resource allocation (Time-domain Resource Allocation, TDRA), a virtual resource block to physical resource block mapping, a physical resource block binding scale identifier, a rate matching identifier, and a zero power channel state information reference information trigger. The transport block relevant information includes modulation and coding scheme (MCS), a new-data indicator (New-data Indicator, NDI), and a redundancy version (Redundancy Version, RV). The multi-antenna relevant information includes an antenna port, transmission configuration information (Transmission Configuration Indication, TCI), a sounding reference signal request, and a dedicated demodulation reference signal sequence initial value.

Two different types of dedicated Demodulation Reference Signals (Demodulation Reference Signals, DMRSes) are defined in New Radio (New Radio, NR). Herein, type 1 DMRS has two code division multiplexing (Code Division Multiplexing, CDM) groups and supports a maximum of 8 antenna ports; type 2 DMRS has three CDM groups and supports a maximum of 12 antenna ports. The protocol stipulates that a TCI state may only be associated with a CDM group.

A User Equipment (User Equipment, UE) does not know which transmission and reception point (Transmission and Reception Point, TRP) a downlink transmission comes from. A signal sent from TRP is transparent to UE. UE may distinguish the signals sent from different TRPs through the TCI state.

Distributed Multiple-Input Multiple-Output (Distributed Multiple-Input Multiple-Output, Distributed MIMO) and Cell-Free Massive Multiple-Input Multiple-Output (Cell-Free Massive Multiple-Input Multiple-Output, CF-MIMO) are emerging as pivotal technologies in the realm of B5G/6G multi-antenna, attracting growing research interest. A notable characteristic of these technologies is that spatial distribution of access points (Access Points, APs) in a given area is more dispersed than the spatial distribution of the centralized APs currently used in NR, and a number of APs is relatively large, where multiple APs serve multiple user equipment (User Equipment, UE) simultaneously.

In potential application scenarios of CF-MIMO in the future, such as large stadiums, shopping malls, airports, and automated factories, spatial distribution of UEs is very complex. Some areas will have dense UEs with a large number, some areas will have sparse UEs with a small number, and some areas will have a moderate density and number of UEs. This situation may result in different service requirements at different spatial locations, causing the scale of collaborative APs, the number of TB blocks scheduled by collaborative APs, MCS, RV, etc., to be dynamically adjusted according to actual business requirements and channel changes. However, DCI in relevant technologies cannot meet the above requirements.

In view of this, the embodiments of the present disclosure provide a transmission parameter determination method, the transmission parameter determination method may be applied to various communication systems, such as a distributed multiple-input multiple-output (Distributed Multiple-input Multiple-output, D-MIMO) system, a cell-free massive multiple-input multiple-output (Cell-free Massive Multiple-input Multiple-output, CF-MIMO), a future evolution system, or a multi-communication fusion system.

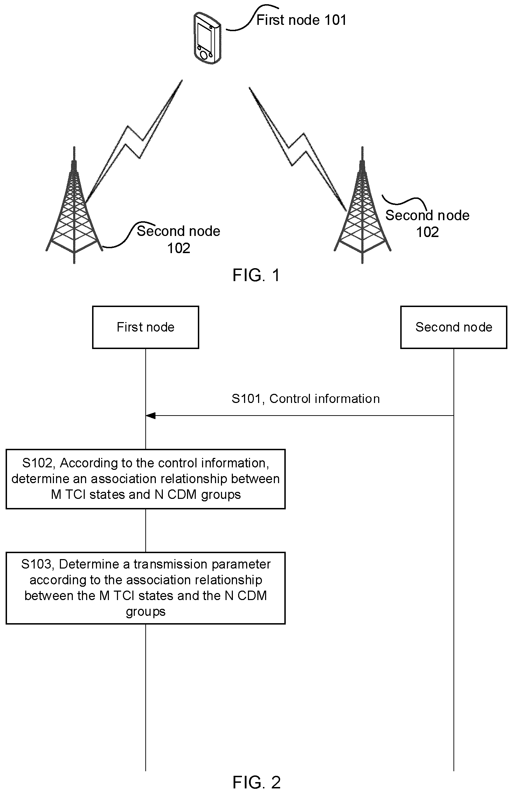

FIG. 1 is a schematic diagram of an architecture of a communication system provided in the embodiments of the present disclosure. As shown in FIG. 1, the communication system may include one or more first nodes 101 and one or more second nodes 102. Herein, the one or more second nodes 102 may provide communication services for the one or more first nodes 101.

Herein, a second node 102 may be a network device, or a device having functions of the network device. The second node may be configured to implement functions such as resource scheduling, wireless resource management, and wireless access control for a terminal device. Specifically, the second node may be any node of a small base station, a wireless access point, a transmission and reception point (Transmission and Reception Point, TRP), a transmission point (Transmission Point, TP) and some other access nodes.

A first node 101 may be a terminal device, or a device having functions of the terminal device. The terminal device may also be referred to as a terminal, a user equipment (User Equipment, UE), a mobile station, or a mobile terminal, etc. The terminal device may be a mobile phone, a tablet computer, a computer with wireless transceiver functions, a virtual reality terminal device, an augmented reality terminal device, a wireless terminal in industrial control, a wireless terminal in self driving, a wireless terminal in a remote surgery, a wireless terminal in transportation safety, a wireless terminal in a smart city, or a wireless terminal in smart home, etc. A specific device form adopted by the terminal device is not limited in the embodiments of the present disclosure.

It should be noted that FIG. 1 is merely an exemplary framework diagram, and a number of nodes and names of the various devices included in FIG. 1 are not limited. In addition to functional nodes shown in FIG. 1, the communication system may further include other nodes, such as a core network device.

It should be noted that the communication system shown in FIG. 1 is only for illustrating the technical solutions of the present disclosure more clearly and does not constitute a limitation on the present disclosure. A person of ordinary skill in the art may know that with the evolution of network architecture and the emergence of new business scenarios, the technical solutions provided by the present disclosure are also applicable to similar technical problems.

The technical solutions in the embodiments of the present disclosure will be described in combination with the accompanying drawings in the embodiments of the present disclosure below.

As shown in FIG. 2, FIG. 2 shows a transmission parameter determination method provided in the embodiments of the present disclosure, where the method includes S101-S103.

In S101, a second node sends control information; correspondingly, a first node receives the control information.

In some embodiments, the above-mentioned control information is carried in radio resource control (Radio Resource Control, RRC) signaling, media access control-control element (Media Access Control- Control Element, MAC-CE), or downlink control information (Downlink Control Information, DCI).

In S102, the first node determines, according to the control information, an association relationship between M TCI states and N CDM groups.

Herein, M and N are both positive integers. In some examples, M≤4, and N≤4.

In some embodiments, M is greater than or equal to N. That is, different from that a CDM group may only be associated with a TCI state in the relevant technologies, in the embodiments of the present disclosure, a CDM group may be associated with a plurality of TCI states. In this way, a plurality of second nodes (e.g., APs) in the communication system may be indicated to serve a first node (e.g., UE), which may improve the efficiency and reliability of communication information transmission of the first node.

The association relationship between the M TCI states and the N CDM groups is illustrated below by examples.

Example 1: in a case where M is 4 and N is 1, if the 4 TCI states include a first TCI state, a second TCI state, a third TCI state, and a fourth TCI state, a CDM group includes the first CDM group. At this time, the CDM group may be associated with four TCI states, that is, the first TCI state, the second TCI state, the third TCI state, and the fourth TCI state are all associated with the first CDM group.

Example 2: in a case where M is 4 and N is 2, if 4 TCI states include a first TCI state, a second TCI state, a third TCI state, and a fourth TCI state, 2 CDM groups include a first CDM group and a second CDM group. At this time, a CDM group may be associated with 1, 2, or 3 TCI states. For example, the first TCI state and the second TCI state may be associated with the first CDM group, and the third TCI state and the fourth TCI state may be associated with the second CDM group. Alternatively, the first TCI state, the second TCI state, and the third TCI state may be associated with the first CDM group, and the fourth TCI state may be associated with the second CDM group. Of course, there may be other possible association manners between the above-mentioned 4 TCI states and the 2 CDM groups, which is not limited in the embodiments of the present disclosure.

Example 3: in a case where M is 4 and N is 3, if 4 TCI states include a first TCI state, a second TCI state, a third TCI state and a fourth TCI state, 3 CDM groups include a first CDM group, a second CDM group and a third CDM group. At this time, a CDM group may be associated with 1 or 2 TCI states. For example, the first TCI state and the second TCI state may be associated with the first CDM group, the third TCI state may be associated with the second CDM group, and the fourth TCI state may be associated with the third CDM group. Alternatively, the first TCI state may be associated with the first CDM group, the second TCI state may be associated with the second CDM group, and the third TCI state and the fourth TCI state may be associated with the third CDM group. Of course, there may be other possible association manners between the above-mentioned 4 TCI states and the 3 CDM groups, which is not limited in the embodiments of the present disclosure.

Example 4: in a case where M is 4 and N is 4, if 4 TCI states include a first TCI state, a second TCI state, a third TCI state and a fourth TCI state, 4 CDM groups include a first CDM group, a second CDM group, a third CDM group and a fourth CDM group. At this time, a CDM group may be associated with a TCI state. For example, the first TCI state may be associated with the first CDM group, the second TCI state may be associated with the second CDM group, the third TCI state may be associated with the third CDM group, and the fourth TCI state may be associated with the fourth CDM group.

Example 5: in a case where M is 3 and N is 1, if 3 TCI states include a first TCI state, a second TCI state, and a third TCI state, 1 CDM group includes a first CDM group. At this time, a CDM group may be associated with three TCI states, that is, the first TCI state, the second TCI state and the third TCI state are all associated with the first CDM group.

Example 6: in a case where M is 3 and N is 2, if 3 TCI states include a first TCI state, a second TCI state and a third TCI state, 2 CDM groups include a first CDM group and a second CDM group. At this time, a CDM group may be associated with 1 or 2 TCI states. For example, the first TCI state and the second TCI state may be associated with the first CDM group, and the third TCI state may be associated with the second CDM group. Alternatively, the first TCI state and the third TCI state may be associated with the first CDM group, and the fourth TCI state may be associated with the second CDM group. Of course, there may be other possible association relationships between the above-mentioned 3 TCI states and the 2 CDM groups, which is not limited in the embodiments of the present disclosure.

Example 7: in a case where M is 3 and N is 3, if 3 TCI states include a first TCI state, a second TCI state and TCI state, 3 CDM groups include a first CDM group, a second CDM group and a third CDM group. At this time, a CDM group may be associated with a TCI state. For example, the first TCI state may be associated with the first CDM group, the second TCI state may be associated with the second CDM group, and the third TCI state may be associated with the third CDM group.

Optionally, the above-mentioned first CDM group is CDM group 0, the second CDM group is CDM group 1, the third CDM group is CDM group 2, and the fourth CDM group is CDM group 3.

In some embodiments, the above M TCI states are any M TCI states of TCI state1 to TCI state127. For example, the above-mentioned first TCI state may be TCI state0, the second TCI state may be TCI state1, the third TCI state may be TCI state2, and the fourth TCI state may be TCI state3. For another example, the above-mentioned first TCI state may be TCI state5, the second TCI state may be TCI state7, the third TCI state may be TCI state8, and the fourth TCI state may be TCI state9. For another example, the above-mentioned first TCI state may be TCI state1, the second TCI state may be TCI state2, the third TCI state may be TCI state126, and the fourth TCI state may be TCI state127. Of course, the above-mentioned first TCI state, second TCI state, third TCI state and fourth TCI state may also have other implementation combinations, which are not listed herein one by one.

In S103, the first node determines a transmission parameter according to the association relationship between the M TCI states and the N CDM groups.

Optionally, the above transmission parameters include one or more of the following: a PRG_size, an MCS table, a DMRS port, TDRA, FDRA, MCS, RV, NDI or a number of TBs.

Processes of determining the PRG size, MCS table, DMRS port, TB, and RV are described as follows.

### (1) PRG size

In some embodiments, the PRG size is determined according to a number of TCI states associated with a CDM group. Optionally, there may be an association relationship between this CDM group and the PRG size. That is, the PRG size associated with a CDM group is determined according to a number of TCI states associated with the CDM.

Optionally, a range of a value of the number of TCI states associated with a CDM group includes at least one of 1, 2, 3, or 4. A range of a value of the PRG size includes at least one of 1, 2, 3, 4, 5, 6, 7, 8, 10, 11, 12, or a wideband.

In some embodiments, the PRG size may satisfy a positive correlation or a negative correlation with the number of TCI states associated with a CDM group. Alternatively, the PRG size and the number of TCI states associated with a CDM group may also satisfy other functional relationships besides the negative correlation and the positive correlation.

In some embodiments, there is a one-to-one mapping relationship between the PRG size and the number of TCI states associated with a CDM, that is, a value of the number of TCI states corresponds to a value of the PRG size, and different values of the number of TCI states correspond to different values of the PRG size. Alternatively, there is a one-to-many mapping relationship between the PRG size and the number of TCI states associated with a CDM, that is, multiple values of the number of TCI states correspond to a value of the PRG size.

Exemplarily, in a case where a maximum of the number of TCI states associated with a CDM group is 4, the PRG size and the number of TCI states associated with a CDM group satisfy any one of the following relationships:
Relationship 1-1: the number of TCI states associated with a CDM group is 4, and the PRG size is wideband; or the number of TCI states associated with a CDM group is 3, and the PRG size is wideband; or the number of TCI states associated with a CDM group is 2, and the PRG size is 4; or the number of TCI states associated with a CDM group is 1, and the PRG size is 2.
Relationship 1-2: the number of TCI states associated with a CDM group is 4, and the PRG size is 2; or the number of TCI states associated with a CDM group is 3, and the PRG size is 4; or the number of TCI states associated with a CDM group is 2, and the PRG size is wideband; or the number of TCI states associated with a CDM group is 1, and the PRG size is wideband.
Relationship 1-3: the number of TCI states associated with a CDM group is 4, and the PRG size is 3; or the number of TCI states associated with a CDM group is 3, and the PRG size is 6; or the number of TCI states associated with a CDM group is 2, and the PRG size is 8; or the number of TCI states associated with a CDM group is 1, and the PRG size is wideband.

Exemplarily, in a case where a maximum of the number of TCI states associated with a CDM group is 3, the PRG size and the number of TCI states associated with a CDM group satisfy any one of the following relationships:
Relationship 1-4: the number of TCI states associated with a CDM group is 3, and the PRG size is 8; or the number of TCI states associated with a CDM group is 2, and the PRG size is 4; or the number of TCI states associated with a CDM group is 1, and the PRG size is 2.
Relationship 1-5: the number of TCI states associated with a CDM group is 3, and the PRG size is 3; or the number of TCI states associated with a CDM group is 2, and the PRG size is 5; or the number of TCI states associated with a CDM group is 1, and the PRG size is 7.
Relationship 1-6: the number of TCI states associated with a CDM group is 3, and the PRG size is wideband; or the number of TCI states associated with a CDM group is 2, and the PRG size is wideband; or the number of TCI states associated with a CDM group is 1, and the PRG size is 2.

Exemplarily, in a case where a maximum of the number of TCI states associated with a CDM group is 2, the PRG size and the number of TCI states associated with a CDM group satisfy any one of the following relationships:
Relationship 1-7: the number of TCI states associated with a CDM group is 2, and the PRG size is 6; or the number of TCI states associated with a CDM group is 1, and the PRG size is 3.
Relationship 1-8: if the number of TCI states associated with a CDM group is 2, the PRG size is 2; or the number of TCI states associated with a CDM group is 1, the PRG size is 4.

It should be understood that the above-mentioned description of a corresponding relationship between the PRG size and the number of TCI states associated with a CDM group is merely exemplary, and other corresponding relationships may also be satisfied between the PRG size and the number of TCI states associated with a CDM group, which are not limited thereto.

### (2) MCS table

In some embodiments, multiple MCS tables have been defined in the relevant technologies, such as 64-QAM table, 256-QAM table, 1024-QAM table, and low-SE-64-QAM table. In the embodiments of the present disclosure, a new MCS table may be further defined to better suit new application scenarios (e.g., a Cell-Free network). For the convenience of description, the MCS table defined in the relevant technologies is referred to as a first-type MCS table, and an MSC table newly defined in the embodiments of the present disclosure is referred to as a second-type MCS table. Herein, the first-type MSC table includes the MCS table shown in Table 1 to Table 4 above.

In some embodiments, compared with a range of a value of the modulation order in the first-type MCS table including 2, 4, 6, 8, and 10, a range of a value of the modulation order in the second-type MCS table includes a portion of 2, 4, 6, 8, and 10. In some examples, the modulation order in the second-type MCS table may only take a value, for example, the value may only be 2, or the value may only be 4, or the value may only be 6, or the value may only be 8, or the value may only be 10. In other examples, the modulation order in the second-type MCS table may only take two values, for example, the value may only be chosen from 2 and 4, or the value may only be chosen from 4 and 6, or the value may only be chosen from 6 and 8, or the value may only be chosen from 8 and 10.

For the application scenarios of Cell-free networks, the more TCI states a CDM group is associated with, the more APs will participate in collaborative transmission, and quality of channels between different collaborative APs and UEs will tend to be consistent. Therefore, the overall distribution of modulation orders in the MCS table will tend to be consistent. Compared with a variance value of the modulation orders in the first-type MCS table, a variance value of the modulation orders in the second-type MCS table is smaller. In this way, the second-type MCS table may be more suitable for application scenarios of Cell-free networks.

In some embodiments, there are multiple possibilities for channel quality between the cooperative AP and the UE. The channel quality between all cooperative APs and UEs may be very good, achieving a strong combination effect; or the channel quality between all cooperative APs and UEs may be poor or average, achieving the purpose of reliable transmission. Therefore, a target bit rate and/or spectrum efficiency corresponding to an MCS idex in the second-type MCS table may be greater than a target bit rate and/or spectrum efficiency corresponding to the same MCS idex in the first-type MCS table. Alternatively, the target bit rate and/or spectrum efficiency corresponding to an MCS idex in the second-type MCS table may be smaller than the target bit rate and/or spectrum efficiency corresponding to the same MCS idex in the first-type MCS table. Alternatively, the target bit rate and/or spectrum efficiency corresponding to an MCS idex in the second-type MCS table may be equal to the target bit rate and/or spectrum efficiency corresponding to the same MCS idex in the first-type MCS table.

In some embodiments, the MCS table is determined according to the number of TCI states associated with a CDM group. In other words, the MCS table used during information transmission and related to the CDM group may be determined according to the number of TCI states associated with the CDM group.

Optionally, the MCS table includes four columns of elements: an MCS index, a modulation order, a target bit rate, and spectrum efficiency. In some examples, a range of a value of MCS index is an integer among 0 to 31. A range of a value of the modulation order includes at least one of 2, 4, 6, 8, and 10. A range of a value of the target bit rate includes at least one of 30, 40, 64, 120, 251, 379, 567, 719, and 948. A range of a value of spectrum efficiency includes 0.0586, 0.0781, 0.0977, 0.1250, 0.2344, 0.4902, 0.7402, 3.3223, 4.2129, and 9.2578. In some examples, there is a functional relationship between the MCS index, the modulation order, the target bit rate, and the spectrum efficiency.

In some embodiments, the first node is configured with multiple MCS tables in a pre-configured or network-configured manner, for example, the first node may be configured with a first MCS table, a second MCS table, a third MCS table, and a fourth MCS table. Each MCS table has an index that uniquely identifies the MCS table. At least one of the following parameters corresponding to a same MCS index differs between different MCS tables: a modulation order, a target bit rate or spectrum efficiency.

Optionally, the first MCS table, the second MCS table, the third MCS table and the fourth MCS table may be a first-type MCS table or a second-type MCS table, which are not limited in the present disclosure. Exemplarily, taking a first MCS table and a second MCS table being configured as an example, the first MCS table may be a first-type MCS table, and the second MCS table may be a second-type MCS table. Alternatively, both the first MCS table and the second MCS table may be second-type MCS tables. Alternatively, both the first MCS table and the second MCS table may be first-type MCS tables.

In some embodiments, there is a one-to-one mapping relationship between the MCS table and the number of TCI states associated with a CDM group, that is, different values of the number of TCI states correspond to different MCS tables. Alternatively, there is a one-to-many mapping relationship between the MCS table and the number of TCI states associated with a CDM group, that is, different values of the number of TCI states can correspond to a same MCS table.

Exemplarily, in a case where a maximum of TCI states associated with a CDM group is 4, the MCS table and the number of TCI states associated with a CDM group satisfy any one of the following relationships:

Relationship 2-1: the number of TCI states associated with a CDM group is 4, and the MCS table is the first MCS table; or the number of TCI states associated with a CDM group is 3, and the MCS table is the first MCS table; or the number of TCI states associated with a CDM group is 2, and the MCS table is the second MCS table; or the number of TCI states associated with a CDM group is 1, and the MCS table is the third MCS table.

Relationship 2-2: the number of TCI states associated with a CDM group is 4, and the MCS table is the second MCS table; or the number of TCI states associated with a CDM group is 3, and the MCS table is the second MCS table; or the number of TCI states associated with a CDM group is 2, and the MCS table is the third MCS table; or the number of TCI states associated with a CDM group is 1, and the MCS table is the fourth MCS table.

Relationship 2-3: the number of TCI states associated with a CDM group is 4, and the MCS table is the fourth MCS table; or the number of TCI states associated with a CDM group is 3, and the MCS table is the third MCS table; or the number of TCI states associated with a CDM group is 2, and the MCS table is the second MCS table; or the number of TCI states associated with a CDM group is 1, and the MCS table is the first MCS table.

Exemplarily, in a case where a maximum of TCI states associated with a CDM group is 3, the MCS table and the number of TCI states associated with a CDM group satisfy any one of the following relationships:
Relationship 2-4: the number of TCI states associated with a CDM group is 3, and the MCS table is the first MCS table; or the number of TCI states associated with a CDM group is 2, and the MCS table is the first MCS table; or the number of TCI states associated with a CDM group is 1, and the MCS table is the second MCS table.
Relationship 2-5: the number of TCI states associated with a CDM group is 3, and the MCS table is the first MCS table; or the number of TCI states associated with a CDM group is 2, and the MCS table is the second MCS table; or the number of TCI states associated with a CDM group is 1, and the MCS table is the third MCS table.
Relationship 2-6: the number of TCI states associated with a CDM group is 3, and the MCS table is the third MCS table; or the number of TCI states associated with a CDM group is 2, and the MCS table is the second MCS table; or the number of TCI states associated with a CDM group is 1, and the MCS table is the first MCS table.

Exemplarily, in a case where a maximum of TCI states associated with a CDM group is 2, the MCS table and the number of TCI states associated with a CDM group satisfy any one of the following relationships:
Relationship 2-7: the number of TCI states associated with a CDM group is 2, and the MCS table is the first MCS table; or the number of TCI states associated with a CDM group is 1, and the MCS table is the second MCS table.
Relationship 2-8: the number of TCI states associated with a CDM group is 2, and the MCS table is the second MCS table; or the number of TCI states associated with a CDM group is 1, and the MCS table is the first MCS table.

### (3) The number of TBs

In some embodiments, the number of TBs is determined according to the number of TCI states associated with a CDM group.

For example, if the number of TCI states associated with a CDM group is 3, the number of TBs may be 2. Alternatively, if the number of TCI states associated with a CDM group is 3, the number of TBs may be 3. Alternatively, if the number of TCI states associated with a CDM group is 4, the number of TBs may be 3. Alternatively, if the number of TCI states associated with a CDM group is 4, the number of TBs may be 4.

### (4) DMRS port

In some embodiments, the DMRS port associated with each TCI state in the M TCI states is determined according to the association relationship between the M TCI states and the N CDM groups, a number R of scheduled TBs, and a number L of transmission layers. Optionally, the number R of scheduled TBs and the number L of transmission layers may be determined according to control information.

Optionally, in a case where M=3, N=3, and R=2, and if the three TCI states include a first TCI state, a second TCI state, and a third TCI state, and the first TCI state is associated with the first CDM group, the second TCI state is associated with the second CDM group, and the third TCI state is associated with the third CDM group.

Optionally, in the embodiments, the first CDM group may be the above-mentioned CDM group 0, the second CDM group may be the above-mentioned CDM group 1, and the third CDM group may be the above-mentioned CDM group 2, and the fourth CDM group may be the above-mentioned CDM group 3, which will not be repeated below.

DMRS port indexes associated with various TCI states may specifically be as follows.

If L=8, the first TCI state is associated with four DMRS ports of the first CDM group, namely DMRS port0, DMRS port1, DMRS port6 and DMRS port7, respectively. The second TCI state is associated with two DMRS ports of the second CDM group, namely DMRS port2 and DMRS port3, respectively. The third TCI state is associated with two DMRS ports of the third CDM group, namely DMRS port4 and DMRS port5, respectively.

If L=7, the first TCI state is associated with four DMRS ports of the first CDM group, namely DMRS port0, DMRS port1, DMRS port6 and DMRS port7, respectively. The second TCI state is associated with two DMRS ports of the second CDM group, namely DMRS port2 and DMRS port3, respectively. The third TCI state is associated with one DMRS port of the third CDM group, namely DMRS port4.

If L=7, the first TCI state is associated with the three DMRS ports of the first CDM group, namely DMRS port0, DMRS port1 and DMRS port6, respectively. The second TCI state is associated with two DMRS ports of the second CDM group, namely DMRS port2 and DMRS port3, respectively. The third TCI state is associated with two DMRS ports of the third CDM group, namely DMRS port4 and DMRS port5, respectively.

If L=6, the first TCI state is associated with the four DMRS ports of the first CDM group, namely DMRS port0, DMRS port1, DMRS port6 and DMRS port7, respectively. The second TCI state is associated with a DMRS port of the second CDM group, namely DMRS port2. The third TCI state is associated with a DMRS port of the third CDM group, namely DMRS port 4.

If L=5, the first TCI state is associated with the three DMRS ports of the first CDM group, namely DMRS port0, DMRS port1 and DMRS port6, respectively. The second TCI state is associated with a DMRS port of the second CDM group, namely DMRS port2. The third TCI state is associated with a DMRS port of the third CDM group, namely DMRS port 4.

If L=6, the first TCI state is associated with two DMRS ports of the first CDM group, namely DMRS port0 and DMRS port1, respectively. The second TCI state is associated with two DMRS ports of the second CDM group, namely DMRS port2 and DMRS port3, respectively. The third TCI state is associated with two DMRS ports of the third CDM group, namely DMRS port4 and DMRS port5, respectively.

If L=5, the first TCI state is associated with two DMRS ports of the first CDM group, namely DMRS port0 and DMRS port1, respectively. The second TCI state is associated with two DMRS ports of the second CDM group, namely DMRS port2. The third TCI state is associated with a DMRS port of the third CDM group, namely DMRS port 4.

Optionally, in a case where M=4, N=4, R=2, if the 4 TCI states include a first TCI state, a second TCI state, a third TCI state and a fourth TCI state, and the first TCI state is associated with the first CDM group, the second TCI state is associated with the second CDM group, the third TCI state is associated with the third CDM group, and the fourth TCI state is associated with the fourth CDM group.

The DMRS port indexes associated with various TCI states may specifically be as follows.

If L=8, the first TCI state is associated with two DMRS ports, namely DMRS port 0 and DMRS port 1 of the first CDM group, respectively. The second TCI state is associated with two DMRS ports of the second CDM group, namely DMRS port2 and DMRS port3, respectively. The third TCI state is associated with two DMRS ports of the third CDM group, namely DMRS port4 and DMRS port5, respectively. The fourth TCI state is associated with two DMRS ports of the fourth CDM group, namely DMRS port6 and DMRS port7, respectively.

If L=7, the first TCI state is associated with the two DMRS ports of the first CDM group, namely DMRS port0 and DMRS port1, respectively. The second TCI state is associated with two DMRS ports of the second CDM group, namely DMRS port2 and DMRS port3, respectively. The third TCI state is associated with two DMRS ports of the third CDM group, namely DMRS port4 and DMRS port5, respectively. The fourth TCI state is associated with a DMRS port of the fourth CDM group, namely DMRS port6.

If L=6, the first TCI state is associated with two DMRS ports of the first CDM group, namely DMRS port0 and DMRS port1, respectively. The second TCI state is associated with two DMRS ports of the second CDM group, namely DMRS port2 and DMRS port3, respectively. The third TCI state is associated with a DMRS port of the third CDM group, namely DMRS port4, and the fourth TCI state is associated with a DMRS port of the fourth CDM group, namely DMRS port6.

If L=5, the first TCI state is associated with two DMRS ports of the first CDM group, namely DMRS port0 and DMRS port1, respectively. The second TCI state is associated with a DMRS port of the second CDM group, namely DMRS port2. The third TCI state is associated with a DMRS port of the third CDM group, namely DMRS port4, and the fourth TCI state is associated with a DMRS port of the fourth CDM group, namely DMRS port6.

Optionally, in a case where M=3, N=3, and R=3, the three TCI states include a first TCI state, a second TCI state, and a third TCI state, and the first TCI state is associated with the first CDM group, the second TCI state is associated with the second CDM group, and the third TCI state is associated with the third CDM group.

The DMRS port indexes associated with various TCI states may specifically be as follows.

If L=12, the first TCI state is associated with the four DMRS ports of the first CDM group, namely DMRS port0, DMRS port1, DMRS port6 and DMRS port7, respectively. The second TCI state is associated with four DMRS ports of the second CDM group, namely DMRS port 2, DMRS port 3, DMRS port 8 and DMRS port 9, respectively. The third CDM group in the third TCI state is associated with four DMRS ports, namely DMRS port 4, DMRS port 5, DMRS port 10 and DMRS port 11, respectively.

If L=11, the first TCI state is associated with the four DMRS ports of the first CDM group, namely DMRS port0, DMRS port1, DMRS port6 and DMRS port7, respectively. The second TCI state is associated with four DMRS ports of the second CDM group, namely DMRS port 2, DMRS port 3, DMRS port 8 and DMRS port 9, respectively. The third TCI state is associated with three DMRS ports of the third CDM group, namely DMRS port 4, DMRS port 5, and DMRS port 10, respectively.

If L=10, the first TCI state is associated with the four DMRS ports of the first CDM group, namely DMRS port0, DMRS port1, DMRS port6 and DMRS port7, respectively. The second TCI state is associated with four DMRS ports of the second CDM group, namely DMRS port 2, DMRS port 3, DMRS port 8 and DMRS port 9, respectively. The third TCI state is associated with four DMRS ports of the third CDM group, namely DMRS port4 and DMRS port5, respectively.

If L=9, the first TCI state is associated with the four DMRS ports of the first CDM group, namely DMRS port0, DMRS port1, DMRS port6 and DMRS port7, respectively. The second TCI state is associated with four DMRS ports of the second CDM group, namely DMRS port 2, DMRS port 3, DMRS port 8 and DMRS port 9, respectively. The third TCI state is associated with four DMRS ports of the third CDM group, namely DMRS port 4.

Optionally, in a case where M=4, N=4, R=3, if the 4 TCI states include a first TCI state, a second TCI state, a third TCI state and a fourth TCI state, and the first TCI state is associated with the first CDM group, the second TCI state is associated with the second CDM group, the third TCI state is associated with the third CDM group, and the fourth TCI state is associated with the fourth CDM group. The DMRS port indexes associated with various TCI states may specifically be as follows.

If L=12, the first TCI state is associated with the four DMRS ports of the first CDM group, namely DMRS port0, DMRS port1, DMRS port8 and DMRS port9, respectively. The second TCI state is associated with four DMRS ports of the second CDM group, namely DMRS port 2, DMRS port 3, DMRS port 10 and DMRS port 11, respectively. The third TCI state is associated with two DMRS ports of the third CDM group, namely DMRS port4 and DMRS port5, respectively. The fourth TCI state is associated with two DMRS ports of the fourth CDM group, namely DMRS port6 and DMRS port7, respectively.

If L=11, the first TCI state is associated with the four DMRS ports of the first CDM group, namely DMRS port0, DMRS port1, DMRS port8 and DMRS port9, respectively. The second TCI state is associated with three DMRS ports of the second CDM group, namely DMRS port 2, DMRS port 3 and DMRS port 10, respectively. The third TCI state is associated with two DMRS ports of the third CDM group, namely DMRS port4 and DMRS port5, respectively. The fourth TCI state is associated with two DMRS ports of the fourth CDM group, namely DMRS port6 and DMRS port7, respectively.

If L=10, the first TCI state is associated with the four DMRS ports of the first CDM group, namely DMRS port0, DMRS port1, DMRS port8 and DMRS port9, respectively. The second TCI state is associated with two DMRS ports of the second CDM group, namely DMRS port2 and DMRS port3, respectively. The third TCI state is associated with two DMRS ports of the third CDM group, namely DMRS port4 and DMRS port5, respectively. The fourth TCI state is associated with two DMRS ports of the fourth CDM group, namely DMRS port6 and DMRS port7, respectively.

If L=9, the first TCI state is associated with the three DMRS ports of the first CDM group, namely DMRS port0, DMRS port1 and DMRS port8, respectively. The second TCI state is associated with two DMRS ports, namely DMRS port 2 and DMRS port 3 of the second CDM group. The third TCI state is associated with two DMRS ports of the third CDM group, namely DMRS port4 and DMRS port5, respectively. The fourth TCI state is associated with two DMRS ports of the fourth CDM group, namely DMRS port6 and DMRS port7, respectively.

Optionally, in a case where M=4, N=4, R=4, if the 4 TCI states include a first TCI state, a second TCI state, a third TCI state and a fourth TCI state, and the first TCI state is associated with the first CDM group, the second TCI state is associated with the second CDM group, the third TCI state is associated with the third CDM group, and the fourth TCI state is associated with the fourth CDM group. The DMRS port indexes associated with various TCI states may specifically be as follows.

If L=16, the first TCI state is associated with the four DMRS ports of the first CDM group, namely DMRS port0, DMRS port1, DMRS port8 and DMRS port9, respectively. The second TCI state is associated with four DMRS ports of the second CDM group, namely DMRS port 2, DMRS port 3, DMRS port 10 and DMRS port 11, respectively. The third TCI state is associated with the four DMRS ports of the third CDM group, namely DMRS port4, DMRS port5, DMRS port12 and DMRS port13, respectively, and the fourth TCI state is associated with the four DMRS ports of the fourth CDM group, namely DMRS port6, DMRS port7, DMRS port14 and DMRS port15, respectively.

If L=15, the first TCI state is associated with the four DMRS ports of the first CDM group, namely DMRS port0, DMRS port1, DMRS port8 and DMRS port9, respectively. The second TCI state is associated with four DMRS ports of the second CDM group, namely DMRS port 2, DMRS port 3, DMRS port 10 and DMRS port 11, respectively. The third TCI state is associated with the four DMRS ports of the third CDM group, namely DMRS port4, DMRS port5, DMRS port12 and DMRS port13, respectively. The fourth TCI state is associated with the three DMRS ports of the fourth CDM group, namely DMRS port6, DMRS port7 and DMRS port14, respectively.

If L=14, the first TCI state is associated with the four DMRS ports of the first CDM group, namely DMRS port0, DMRS port1, DMRS port8 and DMRS port9, respectively. The second TCI state is associated with four DMRS ports of the second CDM group, namely DMRS port 2, DMRS port 3, DMRS port 10 and DMRS port 11, respectively. The third TCI state is associated with four DMRS ports of the third CDM group, namely DMRS port4, DMRS port5, DMRS port12 and DMRS port13, respectively, and the fourth TCI state is associated with two DMRS ports of the fourth CDM group, namely DMRS port6 and DMRS port7, respectively.

If L=13, the first TCI state is associated with the four DMRS ports of the first CDM group, namely DMRS port0, DMRS port1, DMRS port8 and DMRS port9, respectively. The second TCI state is associated with four DMRS ports of the second CDM group, namely DMRS port 2, DMRS port 3, DMRS port 10 and DMRS port 11, respectively. The third TCI state is associated with three DMRS ports of the third CDM group, namely DMRS port4, DMRS port5, and DMRS port12, respectively. The fourth TCI state is associated with two DMRS ports of the fourth CDM group, namely DMRS port6 and DMRS port7, respectively.

In the embodiments of the present disclosure, the association relationship between the M TCI states and N CDM groups can reflect a communication condition of a first node. Therefore, the determination for the transmission parameter are determined based on the association relationship between the M TCI states and the N CDM groups, which can adapt to the communication requirement of the first node, thereby improving the efficiency and reliability of the communication system.

In some embodiments, the control information includes a retransmission indication identifier corresponding to a TB, and the retransmission indication identifier is used to indicate whether the corresponding TB needs to be retransmitted. Exemplarily, a situation that corresponds to that the retransmission indication identifier is default or a value of the retransmission indication identifier is a first value (e.g., 0) is that a TB does not need to be retransmitted; a situation that corresponds to that the retransmission indication identifier is a second value (e.g., 1) is that a TB needs to be retransmitted.

In some embodiments, the first node determines whether values of RVs of a plurality of TBs indicated to be retransmitted are the same. If the values of the RVs of the plurality of TBs are all different, there is no need to remap the RVs of the plurality of TBs. If there are RVs of at least two TBs among the plurality of TBs whose values are the same, it is necessary to remap the RVs of the at least two TBs whose values are the same.

In some other embodiments, in a case where the control information includes a retransmission indication identifier corresponding to a TB, and values of RVs of the plurality of TBs indicated to be retransmitted are the same, it is also necessary to determine whether a high layer signaling contains a repetition_flag to indicate that the DCI includes the retransmission indication identifier corresponding to the TB, and whether a TCI code point has at least two different TCI states that can be used to transmit the same data.

Furthermore, in a case where the control information includes the retransmission indication identifier corresponding to the TB, and/or the values of RVs of the plurality of TBs indicated to be retransmitted are the same, and/or the high layer signaling contains a repetition_flag to indicate that the DCI includes the retransmission indication identifier corresponding to the TB, and/or the TCI code point has at least two different TCI states that can be used to transmit the same data, it is necessary to remap the RVs of at least two TBs whose values are the same.

In some embodiments, according to a remapping rule, RVs of the plurality of TBs that are indicated to be retransmitted and have the RVs with the same value are remapped.

Optionally, a sequence of values of RVs may be 0231, or 2310, or 3102, or 1023.

Optionally, the remapping rule includes any of Rule 1 to Rule 4:
Rule 1: the RVs of the plurality of TB are remapped in an order obtained by ordering the RVs of the plurality of TBs according to indexes of the TBs in sequence.

Exemplarily, based on an order of the indexes of TBs from one after another, if RVs of TB 0 and TB 1 are the same, the RVs of TB 0 and TB 1 may be remapped to 0, 2; or 2, 3; or 3, 1; or 1, 0.

Rule 2: the RVs of the plurality of TB are remapped in an order obtained by ordering the RVs of the plurality of TBs according to indexes of TCI states associated with the TBs in sequence.

Exemplarily, based on an order of the indexes of the TCI states associated with the TBs from one after another, if the RVs of TB 0 and TB 1 are the same, the RVs of TB 0 and TB 1 may be remapped to 0, 2; or 2, 3; or 3, 1; or 1, 0.

Rule 3: the RVs of the plurality of TB are remapped in an order obtained by ordering the RVs of the plurality of TBs according to maxima of indexes of DMRS ports associated with the TBs in sequence.

Exemplarily, based on an order of minimum indexes of the DMRS ports associated with the TBs, if the RV values of TB 0 and TB 1 are the same, the RVs of TB 0 and TB 1 may be remapped to 0, 2; or 2, 3; or 3, 1; or 1, 0.

Rule 4: the RVs of the plurality of TB are remapped in an order obtained by ordering the RVs of the plurality of TBs according to minima of indexes of DMRS ports associated with the TBs in sequence.

Exemplarily, based on an order of maximum indexes of the DMRS ports associated with the TBs, if the RV values of TB 0 and TB 1 are the same, the RVs of TB 0 and TB 1 may be remapped to 0, 2; or 2, 3; or 3, 1; or 1, 0.

It can be understood that, in order to implement the above functions, the transmission parameter determination apparatus includes corresponding hardware structures and/or software modules for implementing various functions. Those skilled in the art should easily realize that the present disclosure can be implemented in the form of hardware or a combination of hardware and computer software in combination with algorithms and steps described in the embodiments disclosed in the present disclosure. Whether a certain function is implemented by hardware or by computer software driving hardware depends on the specific application and design constraint conditions of the technical solutions. Professional technicians may use different methods to implement the described functions for each specific application, but such implementation should not be considered beyond the scope of the present disclosure.

The embodiments of the present disclosure may divide the transmission parameter determination apparatus into functional modules according to the above-mentioned method embodiments. For example, division of each functional module may be performed corresponding to each function, or two or more functions may be integrated into one functional module. The integrated module may be implemented in the form of hardware, or may be implemented in the form of software. It should be noted that the division of the modules in the embodiments of the present disclosure is illustrated, which is only a logical functional division, and there may be other division manners in an actual implementation. The following is illustrated by adopting a division of each functional module corresponding to each function as an example.

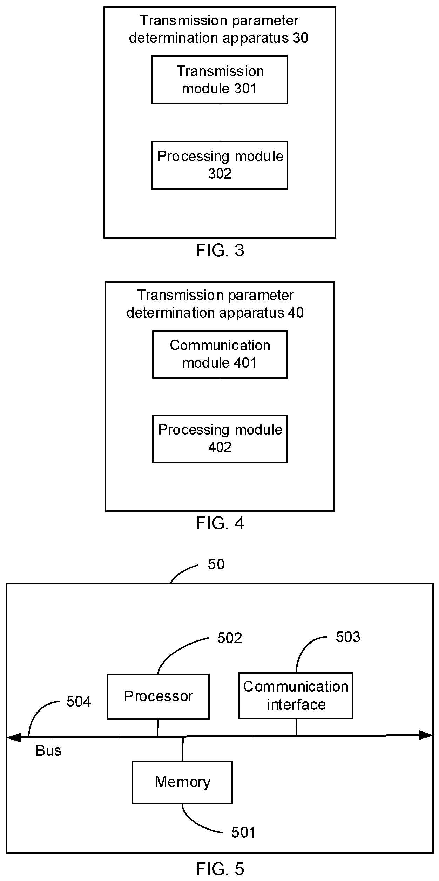

FIG. 3 is a structural schematic diagram of a transmission parameter determination apparatus provided in the embodiments of the present disclosure. As shown in FIG. 3, the transmission parameter determination apparatus 30 may include a communication module 301 and a processing module 302.

The communication module 301 is configured to receive control information.

The processing module 302 is configured to determine, according to the control information, an association relationship between M transmission control information states (TCI states) and N code division multiplexing (CDM) groups; and determine, according to the association relationship between the M TCI states and the N CDM groups, a transmission parameter, where M is greater than or equal to N, and M and N are both positive integers.

In some embodiments, the processing module 302 is further configured to remapp RVs of a plurality of TBs that are indicated to be retransmitted and have RVs with a same value according to a remapping rule. Herein, the remapping rule may refer to the above contents, which are repeated herein.

FIG. 4 is a structural schematic diagram of a transmission parameter determination apparatus provided in the embodiments of the present disclosure. As shown in FIG. 4, the transmission parameter determination apparatus 40 may include a communication module 401 and a processing module 402.

The processing module 402 is configured to generate control information.

The communication module 401 is configured to send the control information, where the control information is used to determine an association relationship between M transmission control information states (TCI states) and N code division multiplexing (CDM) groups, and the association relationship between the M TCI states and the N CDM groups is used to determine a transmission parameter, where M is greater than or equal to N, and M and N are both positive integers.

Herein, the transmission parameter determination method may refer to the above contents, which are repeated herein.

In a case where the functions of the above-mentioned integrated modules are implemented in the form of hardware, another possible structure of a transmission parameter determination apparatus is provided in the embodiments of the present disclosure. As shown in FIG. 5, the transmission parameter determination apparatus 50 includes a processor 502 and a bus 504. Optionally, the transmission parameter determination apparatus may further include a memory 501; optionally, the transmission parameter determination apparatus may further include a communication interface 503.

The processor 502 may be implemented as or performed as various illustrative logical blocks, modules and circuits described in conjunction with disclosed contents of the present disclosure. The processor 502 may be a central processing unit, a general-purpose processor, a digital signal processor, an application specific integrated circuit, a field programmable gate array or any other programmable logic device, a transistor logic device, a hardware component, or any combination thereof. The processor 502 may implement or execute various illustrative logical blocks, modules and circuits described in conjunction with the disclosed contents of the present disclosure. The processor 502 may also be a combination that implements computing functions, for example, the processor 302 includes a combination of one or more microprocessors, a combination of a DSP (digital signal processor) and a microprocessor, or the like.

The communication interface 503 is configured to connect to other devices through a communication network. The communication network may be the Ethernet, a wireless access network, a wireless local area networks (Wireless Local Area Networks, WLAN), or the like.

The memory 501 may be a read-only memory (read-only memory, ROM) or other types of static storage devices that can store static information and instructions, a random access memory (random access memory, RAM), or other types of dynamic storage devices that can store information and instructions, or an electrically erasable programmable read-only memory (electrically erasable programmable read-only memory, EEPROM), a magnetic disk storage medium or any other magnetic storage devices, or any other medium that can be used to carry or store desired program codes with a form of instructions or data and can be accessed by a computer, which is not limited thereto.

As a possible implementation, the memory 501 may exist independently from the processor 502, and the memory 501 may be connected to the processor 502 through the bus 504 for storing instructions or program codes. When the processor 502 invokes and executes the instructions or program codes stored in the memory 501, the processor 302 may implement the transmission parameter determination method provided in the embodiments of the present disclosure.

In another possible implementation, the memory 501 may be integrated with the processor 502.

The bus 504 may be an extended industry standard architecture (Extended Industry Standard Architecture, EISA) bus, or the like. The bus 504 may be classified as an address bus, a data bus, or a control bus, or the like. For ease of representation, only a single thick line is used in FIG. 5 to represent the bus, but it does not mean that there is only one bus or one type of bus.

Some embodiments of the present disclosure provide a computer-readable storage medium (for example, a non-transitory computer-readable storage medium), and the computer-readable storage medium has stored computer program instructions, and the computer program instructions, upon being executed on a computer, enable the computer to perform the transmission parameter determination method as described in any embodiment of the above embodiments.

For example, the above-mentioned computer-readable storage medium may include, but not limited to: a magnetic storage device (e.g., a hard disk, a floppy disk, or a magnetic tape, etc.), an optical disk (e.g., a compact disk (Compact Disk, CD), a digital versatile disk (Digital Versatile Disk, DVD), etc.), a smart card and a flash memory device (e.g., an erasable programmable read-only memory (Erasable Programmable Read-Only Memory, EPROM), a card, a stick or a key driver, etc.). The various computer-readable storage media described in the present disclosure may represent one or more devices for storing information and/or other machine-readable storage medium for storing information. The term "machine-readable storage medium" may include, but not limited to, a wireless channel and various other media capable of storing, containing, and/or carrying instructions and/or data.

The embodiments of the present disclosure provide a computer program product including instructions, when the computer program product is run on a computer, the computer is enabled to perform the transmission parameter determination method as described in any embodiment of the above embodiments.

The above descriptions are merely specific implements of the present disclosure, but the scope of protection of the present disclosure is not limited thereto, and any variations or replacements within the technical scope disclosed in the present disclosure shall fall within the protection scope of the present disclosure. Therefore, the protection scope of the present disclosure shall be subject to the protection scope of the claims.

## Claims

1. A transmission parameter determination method, **characterized in that** the method comprises:
receiving control information;
determining, according to the control information, an association relationship between M transmission control information states (TCI states) and N code division multiplexing (CDM) groups, wherein M is greater than or equal to N, and M and N are both positive integers; and
determining, according to the association relationship between the M TCI states and the N CDM groups, a transmission parameter.

2. The method according to claim 1, wherein
in response to that M=4 and N=1, the association relationship between the M TCI states and the N CDM groups includes: a first CDM group being associated with a first TCI state, a second TCI state, a third TCI state, and a fourth TCI state;
in response to that M=4 and N=2, the association relationship between the M TCI states and the N CDM groups includes: a first CDM group being associated with a first TCI state and a second TCI state, and a second CDM group being associated with a third TCI state and a fourth TCI state; or the first CDM group being associated with the first TCI state, the second TCI state and the third TCI state, and the second CDM group being associated with the fourth TCI state;
in response to that M=4 and N=3, the association relationship between the M TCI states and the N CDM groups includes: a first CDM group being associated with a first TCI state and a second TCI state, a second CDM group being associated with a third TCI state, and a third CDM group being associated with a fourth TCI state; or the first CDM group being associated with the first TCI state, the second CDM group being associated with the second TCI state, and the second CDM group being associated with the third TCI state and the fourth TCI state;
in response to that M=4 and N=4, the association relationship between the M TCI states and the N CDM groups includes: any one of a first CDM group, a second CDM group, a third CDM group, and a fourth CDM group being associated with any one of a first TCI state, a second TCI state, a third TCI state, and a fourth TCI state;
in response to that M=3 and N=1, the association relationship between the M TCI states and the N CDM groups includes: a first CDM group being associated with a first TCI state, a second TCI state, and a third TCI state;
in response to that M=3 and N=2, the association relationship between the M TCI states and the N CDM groups includes: a first CDM group being associated with a first TCI state and a second TCI state, and a second CDM group being associated with a third TCI state; or the first CDM group being associated with the first TCI state and the third TCI state, and the second CDM group being associated with the second TCI state; or
in response to that M=3 and N=3, the association relationship between the M TCI states and the N CDM groups includes: any one of a first CDM group, a second CDM group, a third CDM group, and a fourth CDM group being associated with any one of a first TCI state, a second TCI state, a third TCI state, and a fourth TCI state.

3. The method according to claim 2, wherein the first CDM group is CDM group 0, the second CDM group is CDM group 1, the third CDM group is CDM group 2, and the fourth CDM group is CDM group 3.

4. The method according to any one of claims 1 to 3, wherein the transmission parameter comprises one or more of: a precoding resource block group size (PRG_size), a modulation and coding scheme table (MCS table), a dedicated demodulation reference signal port (DMRS port), a time-domain resource allocation (TDRA), a frequency-domain resource allocation (FDRA), a modulation and coding scheme (MCS), a redundancy version (RV), a new-data identifier (NDI) or a number of transport blocks (TBs).

5. The method according to claim 4, wherein the PRG size is determined according to a number of TCI states associated with a CDM group.

6. The method according to claim 5, wherein the PRG size satisfies a positive correlation or a negative correlation with the number of TCI states associated with a CDM group.

7. The method according to claim 5, wherein a range of a value of the number of TCI states associated with a CDM group includes at least one of 1, 2, 3, or 4; a range of a value of the PRG size includes at least one of 1, 2, 3, 4, 5, 6, 7, 8, 10, 11, 12, or a wideband.

8. The method according to claim 7, wherein
in response to that a maximum of the number of TCI states associated with a CDM group is 4, the number of TCI states associated with a CDM group is 4, and the PRG size is wideband; or the number of TCI states associated with a CDM group is 3, and the PRG size is wideband; or the number of TCI states associated with a CDM group is 2, and the PRG size is 4; or the number of TCI states associated with a CDM group is 1, and the PRG size is 2; or
in response to that the maximum of the number of TCI states associated with a CDM group is 4, the number of TCI states associated with a CDM group is 4, and the PRG size is 2; or the number of TCI states associated with a CDM group is 3, and the PRG size is 4; or the number of TCI states associated with a CDM group is 2, and the PRG size is wideband; or the number of TCI states associated with a CDM group is 1, and the PRG size is wideband; or
in response to that the maximum of the number of TCI states associated with a CDM group is 4, the number of TCI states associated with a CDM group is 4, and the PRG size is 3; or the number of TCI states associated with a CDM group is 3, and the PRG size is 6; or the number of TCI states associated with a CDM group is 2, and the PRG size is 8; or the number of TCI states associated with a CDM group is 1, and the PRG size is wideband; or
in response to that the maximum of the number of TCI states associated with a CDM group is 3, the number of TCI states associated with a CDM group is 3, and the PRG size is 8; or the number of TCI states associated with a CDM group is 2, and the PRG size is 4; or the number of TCI states associated with a CDM group is 1, and the PRG size is 2; or
in response to that the maximum of the number of TCI states associated with a CDM group is 3, the number of TCI states associated with a CDM group is 3, and the PRG size is 3; or the number of TCI states associated with a CDM group is 2, and the PRG size is 5; or the number of TCI states associated with a CDM group is 1, and the PRG size is 7; or
in response to that the maximum of the number of TCI states associated with a CDM group is 3, the number of TCI states associated with a CDM group is 3, and the PRG size is wideband; or the number of TCI states associated with a CDM group is 2, and the PRG size is wideband; or the number of TCI states associated with a CDM group is 1, and the PRG size is 2; or
in response to that the maximum of the number of TCI states associated with a CDM group is 2, the number of TCI states associated with a CDM group is 2, and the PRG size is 6; or the number of TCI states associated with a CDM group is 1, and the PRG size is 3; or
in response to that the maximum of the number of TCI states associated with a CDM group is 2, the number of TCI states associated with a CDM group is 2, and the PRG size is 2; or the number of TCI states associated with a CDM group is 1, and the PRG size is 4.

9. The method according to claim 4, wherein the MCS table is determined according to a number of TCI states associated with a CDM group.

10. The method according to claim 9, wherein the MCS table is configured as a plurality of MCS tables, and at least one of following parameters corresponding to a same MCS index differs between different MCS tables among the plurality of MCS tables: a modulation order, a target bit rate or spectrum efficiency.

11. The method according to claim 10, wherein at least one MCS table among the plurality of MCS tables belongs to a second-type MCS table, and a variance value of modulation orders in the second-type MCS table is smaller than a variance value of modulation orders in a first-type MCS table.

12. The method according to claim 10, wherein at least one MCS table among the plurality of MCS tables belongs to a second-type MCS table;
a target bit rate and/or a spectrum efficiency corresponding to any MCS index in the second-type MCS table is greater than a target bit rate and/or a spectrum efficiency corresponding to a same MCS index in the first-type MCS table; or
a target bit rate and/or a spectrum efficiency corresponding to any MCS index in the second-type MCS table is less than a target bit rate and/or a spectrum efficiency corresponding to a same MCS index in the first-type MCS table; or
a target bit rate and/or a spectrum efficiency corresponding to any MCS index in the second-type MCS table is equal to a target bit rate and/or a spectrum efficiency corresponding to a same MCS index in the first-type MCS table.

13. The method according to claim 4, a number of TBs is determined according to a number of TCI states associated with a CDM group.

14. The method according to claim 13, wherein
a number of TCI states associated with a CDM group is 3, and a number of TBs is 2; or
a number of TCI states associated with a CDM group is 3, and a number of TBs is 3; or
a number of TCI states associated with a CDM group is 4, and a number of TBs is 3; or
a number of TCI states associated with a CDM group is 4, and a number of TBs is 4.

15. The method according to claim 4, wherein a DMRS port associated with each TCI state in the M TCI states is determined according to the association relationship between the M TCI states and the N CDM groups, a number R of scheduled TBs, and a number L of transmission layers.

16. The method according to claim 15, wherein
in response to that M=3, N=3, R=2, and L=8, the first TCI state is associated with four DMRS ports of the first CDM group: DMRS port0, DMRS port1, DMRS port6, and DMRS port7; the second TCI state is associated with two DMRS ports of the second CDM group: DMRS port2 and DMRS port3; the third TCI state is associated with two DMRS ports of the third CDM group: DMRS port4 and DMRS port5; or
in response to that M=3, N=3, R=2, and L=7, the first TCI state is associated with four DMRS ports of the first CDM group: DMRS port0, DMRS port1, DMRS port6, and DMRS port7; the second TCI state is associated with two DMRS ports of the second CDM group: DMRS port2 and DMRS port3; and the third TCI state is associated with a DMRS port of the third CDM group: DMRS port4; or
in response to that M=3, N=3, R=2, and L=5, the first TCI state is associated with three DMRS ports of the first CDM group: DMRS port0, DMRS port1, and DMRS port6, the second TCI state is associated with a DMRS port of the second CDM group: DMRS port2, and the third TCI state is associated with a DMRS port of the third CDM group: DMRS port4; or
in response to that M=4, N=4, R=2, and L=8, the first TCI state is associated with two DMRS ports of the first CDM group: DMRS port0 and DMRS port1, the second TCI state is associated with two DMRS ports of the second CDM group: DMRS port2 and DMRS port3, the third TCI state is associated with two DMRS ports of the third CDM group: DMRS port4 and DMRS port5, and the fourth TCI state is associated with two DMRS ports of the fourth CDM group: DMRS port6 and DMRS port7; or
in response to that M=4, N=4, R=2, and L=7, the first TCI state is associated with two DMRS ports of the first CDM group: DMRS port0 and DMRS port1, the second TCI state is associated with two DMRS ports of the second CDM group: DMRS port2 and DMRS port3, the third TCI state is associated with two DMRS ports of the third CDM group: DMRS port4 and DMRS port5, and the fourth TCI state is associated with a DMRS port of the fourth CDM group: DMRS port6; or
in response to that M=4, N=4, R=2, and L=5, the first TCI state is associated with two DMRS ports of the first CDM group: DMRS port0 and DMRS port1, the second TCI state is associated with a DMRS port of the second CDM group: DMRS port2, the third TCI state is associated with a DMRS port of the third CDM group: DMRS port4, and the fourth TCI state is associated with a DMRS port of the fourth CDM group: DMRS port6; or
in response to that M=3, N=3, R=3, and L=12, the first TCI state is associated with four DMRS ports of the first CDM group: DMRS port0, DMRS port1, DMRS port6, and DMRS port7; the second TCI state is associated with four DMRS ports of the second CDM group: DMRS port2, DMRS port3, DMRS port8, and DMRS port9; the third TCI state is associated with four DMRS ports of the third CDM group: DMRS port4, DMRS port5, DMRS port10, and DMRS port11; or
in response to that M=3, N=3, R=3, and L=11, the first TCI state is associated with four DMRS ports of the first CDM group: DMRS port0, DMRS port1, DMRS port6, and DMRS port7; the second TCI state is associated with four DMRS ports of the second CDM group: DMRS port2, DMRS port3, DMRS port8, and DMRS port9; the third TCI state is associated with three DMRS ports of the third CDM group: DMRS port4, DMRS port5, and DMRS port10; or
in response to that M=3, N=3, R=3, and L=9, the first TCI state is associated with four DMRS ports of the first CDM group: DMRS port0, DMRS port1, DMRS port6, and DMRS port7; the second TCI state is associated with four DMRS ports of the second CDM group: DMRS port2, DMRS port3, DMRS port8, and DMRS port9; the third TCI state is associated with a DMRS port of the third CDM group: DMRS port4; or
in response to that M=4, N=4, R=3, and L=12, the first TCI state is associated with four DMRS ports of the first CDM group: DMRS port0, DMRS port1, DMRS port8, and DMRS port9, the second TCI state is associated with four DMRS ports of the second CDM group: DMRS port2, DMRS port3, DMRS port10, and DMRS port11, the third TCI state is associated with two DMRS ports of the third CDM group: DMRS port4 and DMRS port5, and the fourth TCI state is associated with two DMRS ports of the fourth CDM group: DMRS port6 and DMRS port7; or
in response to that M=4, N=4, R=3, and L=11, the first TCI state is associated with four DMRS ports of the first CDM group: DMRS port0, DMRS port1, DMRS port8, and DMRS port9, the second TCI state is associated with three DMRS ports of the second CDM group: DMRS port2, DMRS port3, and DMRS port10, the third TCI state is associated with two DMRS ports of the third CDM group: DMRS port4 and DMRS port5, and the fourth TCI state is associated with two DMRS ports of the fourth CDM group: DMRS port6 and DMRS port7; or
in response to that M=4, N=4, R=3, and L=9, the first TCI state is associated with three DMRS ports of the first CDM group: DMRS port0, DMRS port1, and DMRS port8, the second TCI state is associated with two DMRS ports of the second CDM group: DMRS port2 and DMRS port3, the third TCI state is associated with two DMRS ports of the third CDM group: DMRS port4 and DMRS port5, and the fourth TCI state is associated with two DMRS ports of the fourth CDM group: DMRS port6 and DMRS port7; or
in response to that M=4, N=4, R=4, and L=16, the first TCI state is associated with four DMRS ports of the first CDM group: DMRS port0, DMRS port1, DMRS port8, and DMRS port9, the second TCI state is associated with four DMRS ports of the second CDM group: DMRS port2, DMRS port3, DMRS port10, and DMRS port11, the third TCI state is associated with four DMRS ports of the third CDM group: DMRS port4, DMRS port5, DMRS port12, and DMRS port13, and the fourth TCI state is associated with four DMRS ports of the fourth CDM group: DMRS port6, DMRS port7, DMRS port14, and DMRS port15; or
in response to that M=4, N=4, R=4, and L=15, the first TCI state is associated with four DMRS ports of the first CDM group: DMRS port0, DMRS port1, DMRS port8, and DMRS port9, the second TCI state is associated with four DMRS ports of the second CDM group: DMRS port2, DMRS port3, DMRS port10, and DMRS port11, the third TCI state is associated the four DMRS ports of the third CDM group: DMRS port4, DMRS port5, DMRS port12, and DMRS port13, and the fourth TCI state is associated with three DMRS ports of the fourth CDM group: DMRS port6, DMRS port7, and DMRS port14; or
in response to that M=4, N=4, R=4, and L=13, the first TCI state is associated with four DMRS ports of the first CDM group: DMRS port0, DMRS port1, DMRS port8, and DMRS port9, the second TCI state is associated with the 4 DMRS ports of the second CDM group: DMRS port2, DMRS port3, DMRS port10, and DMRS port11, the third TCI state is associated with 3 DMRS ports of the third CDM group: DMRS port4, DMRS port5, and DMRS port12, and the fourth TCI state is associated with two DMRS ports of the fourth CDM group: DMRS port6 and DMRS port7.

17. The method according to claim 1, wherein the control information comprises a retransmission indication identifier corresponding to a TB, and the retransmission indication identifier is used to indicate whether the corresponding TB needs to be retransmitted.

18. The method according to claim 17, wherein the method further comprises:
remapping RVs of a plurality of TBs that are indicated to be retransmitted and have the RVs with a same value according to a remapping rule.

19. The method according to claim 18, wherein the remapping rule comprises any one of:
remapping the RVs of the plurality of TB in an order obtained by ordering the RVs of the plurality of TBs according to indexes of the TBs in sequence;
remapping the RVs of the plurality of TB in an order obtained by ordering the RVs of the plurality of TBs according to indexes of TCI states associated with the TBs in sequence;
remapping the RVs of the plurality of TB in an order obtained by ordering the RVs of the plurality of TBs according to maxima of indexes of DMRS ports associated with the TBs in sequence; or
remapping the RVs of the plurality of TB in an order obtained by ordering the RVs of the plurality of TBs according to minima of indexes of DMRS ports associated with the TBs in sequence.

20. The method according to any one of claims 1 to 19, wherein the control information is carried in downlink control information, a radio resource control signaling or a media access control-control element.

21. A transmission parameter determination method, **characterized by** comprising:
sending control information, wherein the control information is used to determine an association relationship between M transmission control information states (TCI states) and N code division multiplexing (CDM) groups, and the association relationship between the M TCI states and the N CDM groups is used to determine a transmission parameter, wherein M is greater than or equal to N, and M and N are both positive integers.

22. The method according to claim 21, wherein
in response to that M=4 and N=1, the association relationship between the M TCI states and the N CDM groups includes: a first CDM group being associated with a first TCI state, a second TCI state, a third TCI state, and a fourth TCI state;
in response to that M=4 and N=2, the association relationship between the M TCI states and the N CDM groups includes: a first CDM group being associated with a first TCI state and a second TCI state, and a second CDM group being associated with a third TCI state and a fourth TCI state; or the first CDM group being associated with the first TCI state, the second TCI state and the third TCI state, and the second CDM group being associated with the fourth TCI state;
in response to that M=4 and N=3, the association relationship between the M TCI states and the N CDM groups includes: a first CDM group being associated with a first TCI state and a second TCI state, a second CDM group being associated with a third TCI state, and a third CDM group being associated with a fourth TCI state; or the first CDM group being associated with the first TCI state, the second CDM group being associated with the second TCI state, and the second CDM group being associated with the third TCI state and the fourth TCI state;
in response to that M=4 and N=4, the association relationship between the M TCI states and the N CDM groups includes: any one of a first CDM group, a second CDM group, a third CDM group, and a fourth CDM group being associated with any one of a first TCI state, a second TCI state, a third TCI state, and a fourth TCI state, wherein a target CDM is any one of the first CDM group, the second CDM group, the third CDM group, or the fourth CDM group, and a target TCI state is any one of the first TCI state, the second TCI state, the third TCI state, or the fourth TCI state;
in response to that M=3 and N=1, the association relationship between the M TCI states and the N CDM groups includes: a first CDM group being associated with a first TCI state, a second TCI state, and a third TCI state;
in response to that M=3 and N=2, the association relationship between the M TCI states and the N CDM groups includes: a first CDM group being associated with a first TCI state and a second TCI state, and a second CDM group being associated with a third TCI state; or the first CDM group being associated with the first TCI state and the third TCI state, and the second CDM group being associated with the second TCI state; or
in response to that M=3 and N=3, the association relationship between the M TCI states and the N CDM groups includes: any one of a first CDM group, a second CDM group, a third CDM group, and a fourth CDM group being associated with any one of a first TCI state, a second TCI state, a third TCI state, and a fourth TCI state.

23. The method according to claim 22, wherein the first CDM group is CDM group 0, the second CDM group is CDM group 1, the third CDM group is CDM group 2, and the fourth CDM group is CDM group 3.

24. The method according to claim 21, wherein the transmission parameter comprises one or more of: a precoding resource block group size (PRG_size), a modulation and coding scheme table (MCS table), a dedicated demodulation reference signal port (DMRS port), a time-domain resource allocation (TDRA), a frequency-domain resource allocation (FDRA), a modulation and coding scheme (MCS), a redundancy version (RV), a new-data identifier (NDI) or a number of transport blocks (TBs).

25. The method according to claim 24, wherein the PRG size is determined according to a number of TCI states associated with a CDM group.

26. The method according to claim 25, wherein the PRG size satisfies a positive correlation or a negative correlation with the number of TCI states associated with a CDM group.

27. The method according to claim 25, wherein a range of a value of the number of TCI states associated with a CDM group includes at least one of 1, 2, 3, or 4; a range of a value of the PRG size includes at least one of 1, 2, 3, 4, 5, 6, 7, 8, 10, 11, 12, or a wideband.

28. The method according to claim 27, wherein
in response to that a maximum of the number of TCI states associated with a CDM group is 4, the number of TCI states associated with a CDM group is 4, and the PRG size is wideband; or the number of TCI states associated with a CDM group is 3, and the PRG size is wideband; or the number of TCI states associated with a CDM group is 2, and the PRG size is 4; or the number of TCI states associated with a CDM group is 1, and the PRG size is 2; or
in response to that the maximum of the number of TCI states associated with a CDM group is 4, the number of TCI states associated with a CDM group is 4, and the PRG size is 2; or the number of TCI states associated with a CDM group is 3, and the PRG size is 4; or the number of TCI states associated with a CDM group is 2, and the PRG size is wideband; or the number of TCI states associated with a CDM group is 1, and the PRG size is wideband; or
in response to that the maximum of the number of TCI states associated with a CDM group is 4, the number of TCI states associated with a CDM group is 4, and the PRG size is 3; or the number of TCI states associated with a CDM group is 3, and the PRG size is 6; or the number of TCI states associated with a CDM group is 2, and the PRG size is 8; or the number of TCI states associated with a CDM group is 1, and the PRG size is wideband; or
in response to that the maximum of the number of TCI states associated with a CDM group is 3, the number of TCI states associated with a CDM group is 3, and the PRG size is 8; or the number of TCI states associated with a CDM group is 2, and the PRG size is 4; or the number of TCI states associated with a CDM group is 1, and the PRG size is 2; or
in response to that the maximum of the number of TCI states associated with a CDM group is 3, the number of TCI states associated with a CDM group is 3, and the PRG size is 3; or the number of TCI states associated with a CDM group is 2, and the PRG size is 5; or the number of TCI states associated with a CDM group is 1, and the PRG size is 7; or
in response to that the maximum of the number of TCI states associated with a CDM group is 3, the number of TCI states associated with a CDM group is 3, and the PRG size is wideband; or the number of TCI states associated with a CDM group is 2, and the PRG size is wideband; or the number of TCI states associated with a CDM group is 1, and the PRG size is 2; or
in response to that the maximum of the number of TCI states associated with a CDM group is 2, the number of TCI states associated with a CDM group is 2, and the PRG size is 6; or the number of TCI states associated with a CDM group is 1, and the PRG size is 3; or
in response to that the maximum of the number of TCI states associated with a CDM group is 2, the number of TCI states associated with a CDM group is 2, and the PRG size is 2; or the number of TCI states associated with a CDM group is 1, and the PRG size is 4.

29. The method according to claim 24, wherein the MCS table is determined according to a number of TCI states associated with a CDM group.

30. The method according to claim 29, wherein the MCS table is configured as a plurality of MCS tables, and at least one of following parameters corresponding to a same MCS index differs between different MCS tables among the plurality of MCS tables: a modulation order, a target bit rate or spectrum efficiency.

31. The method according to claim 30, wherein at least one MCS table among the plurality of MCS tables belongs to a second-type MCS table, and a variance value of modulation orders in the second-type MCS table is smaller than a variance value of modulation orders in a first-type MCS table.

32. The method according to claim 30, wherein at least one MCS table among the plurality of MCS tables belongs to a second-type MCS table;
a target bit rate and/or a spectrum efficiency corresponding to any MCS index in the second-type MCS table is greater than a target bit rate and/or a spectrum efficiency corresponding to a same MCS index in the first-type MCS table; or
a target bit rate and/or a spectrum efficiency corresponding to any MCS index in the second-type MCS table is less than a target bit rate and/or a spectrum efficiency corresponding to a same MCS index in the first-type MCS table; or
a target bit rate and/or a spectrum efficiency corresponding to any MCS index in the second-type MCS table is equal to a target bit rate and/or a spectrum efficiency corresponding to a same MCS index in the first-type MCS table.

33. The method according to claim 21, wherein the control information comprises a retransmission indication identifier corresponding to a TB, and the retransmission indication identifier is used to indicate whether the corresponding TB needs to be retransmitted.

34. The method according to any one of claims 21 to 32, wherein the control information is carried in downlink control information, a radio resource control signaling or a media access control-control element.

35. A transmission parameter determination apparatus, **characterized in that** the transmission parameter determination apparatus comprises a processor, and when the processor executes a computer program, the transmission parameter determination method according to any one of claims 1 to 20 is implemented, or the transmission parameter determination method according to any one of claims 21 to 34 is implemented.

36. A computer-readable storage medium, wherein the computer-readable storage medium comprises computer instructions;
wherein when the computer instructions are executed, the transmission parameter determination method according to any one of claims 1 to 34 is implemented.
